(19) Europäisches Patentamt

European Patent Office

Office européen des brevets

(11) **EP 4 092 079 A1**

(12) **EUROPEAN PATENT APPLICATION**

(43) Date of publication:
**23.11.2022 Bulletin 2022/47**

(21) Application number: **21175408.0**

(22) Date of filing: **21.05.2021**

(51) International Patent Classification (IPC):
***C08L 23/06*** (2006.01)

(52) Cooperative Patent Classification (CPC):
(C-Sets available)
**C08F 210/16; C08L 23/06;** C08L 2203/18;
C08L 2205/025; C08L 2308/00          (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
• **CHENG, Joy Jie**
  **4021 Linz (AT)**
• **NESTELBERGER, Susanne**
  **4021 Linz (AT)**
• **BURYAK, Andrey**
  **4021 Linz (AT)**

(74) Representative: **Kador & Partner PartG mbB**
**Corneliusstraße 15**
**80469 München (DE)**

(54) **PROCESS FOR PRODUCING POLYETHYLENE PIPES WITH HIGH PRESSURE RESISTANCE AND POLYETHYLENE PIPES OBTAINED THEREBY**

(57)     The present invention relates to a process for producing polyethylene pipes with high pressure resistance and polyethylene pipes obtained thereby. The pipes obtained by the process of the invention show increased pressure resistance and more consistent polymer properties. The process for producing a pipe comprises the steps of a) providing polyethylene pellets, b) extruding the polyethylene pellets into a pipe, wherein the extrusion step is conducted at an extrusion melt temperature of at least 225 °C, when the extrusion bath temperature is at least 15 °C, or at an extrusion melt temperature of at least 190 °C, when the extrusion bath temperature is at least 30 °C, extrusion melt temperature and extrusion bath temperature, and wherein the polyethylene pellets provided in step a) comprise a polyethylene composition comprising a copolymer of ethylene and hexene, and the polyethylene composition having a density of from 935 to 955 kg/m$^3$ and a melt flow rate MFR$_5$, determined according to ISO 1133, condition T at a load of 5.0 kg at 190 °C, of from 0.1 to 1.0 g/10 min., and the pipe obtained in step b) has a failure time in the accelerated point loading test (PLT+) of at least 400 h.

Fig. 1

EP 4 092 079 A1

**(Cont. next page)**

(52) Cooperative Patent Classification (CPC): (Cont.)

C-Sets
**C08L 23/06, C08L 23/0815**

**Description**

The present invention relates to a process for producing polyethylene pipes with high pressure resistance and polyethylene pipes obtained thereby. The pipes obtained by the process of the invention show increased pressure resistance and more consistent polymer properties.

Polyolefin pipes and especially polyethylene pipes are conventionally used for transport of water, gas as well as industrial liquids and slurries. Due to their versatility, ease of production and installation as well as non-corrosivity, their use is constantly increasing.

New installation techniques, such as trenchless and sand bed-free installation, demand polyethylene pipe resins with higher and higher resistance to slow crack growth. The requirements for slow crack growth become more and more stringent and many of the existing products fail to consistently meet those requirements.

Depending on the pressure pipes made from a polyethylene composition can withstand at 20°C over 50 years lifetime, the compositions are classified for example as PE80 or PE100.

According to ISO 9080 polyethylene pipes are classified by their minimum required strength, i.e. their capability to withstand different hoop stresses during 50 years at 20 °C without fracturing. Thereby, pipes withstanding a hoop stress of 8.0 MPa ($MRS_{8.0}$) are classified as PE80 pipes, and pipes withstanding a hoop stress of 10.0 MPa ($MRS_{10.0}$) are classified as PE100 pipes. The service temperature for PE100 is usually within the temperature range from about 0 °C to about 50 °C.

The manufacture of polyethylene materials to be used in pressure pipes is discussed for example in an article by Scheirs et al (Scheirs, Bohm, Boot and Leevers: PE100 Resins for Pipe Applications, TRIP Vol. 4, No 12 (1996) pp. 408-415).

Targets for pipes for the transport of pressurized fluids (so called pressure pipes) to withstand higher and higher (internal) design stresses involve both a higher creep resistance and a higher stiffness. Furthermore, as polymer pipes generally are manufactured by extrusion, or, to a smaller extent, by injection moulding, the polyethylene composition also must have good processability.

It is known that in order to comply with the contrary requirements for a pipe material bimodal polyethylene compositions may be used. Such compositions are described e.g. in EP 0 739 937 and WO 02/102891. The bimodal polyethylene compositions described in these documents usually comprise a low molecular weight polyethylene fraction and a high molecular weight fraction of an ethylene copolymer comprising one or more alpha-olefin comonomers.

Polyethylene pipes meeting the PE80 and PE100 requirements are described in EP 20185204.3. In this document a pipe material is disclosed comprising a multimodal polyethylene base resin which comprises a first ethylene homo- or copolymer fraction (A), and a second ethylene-hexene-1 copolymer fraction (B), wherein the base resin has a specific combination in terms of a high number average molecular weight (Mn), a selected hexene comonomer content in the high molecular weight fraction, and a selected amount of the high molecular weight fraction.

Existing polyethylene copolymer grades, when extruded into polyethylene pipes, have showed inconsistent results in the PLT+ (accelerated point load test), depending on the pipe dimensions.

On the other hand, the PLT+ test correlates with strain hardening modulus of the polymer. Therefore, one way to consistently achieve good PLT+ requirements would be to always produce the polymers with very high strain hardening modulus. However, this is not always possible for the following reasons. First, very high strain hardening modulus is associated with low short-term pressure resistance, where certain minimum value is needed to comply with the PE100 standard. Second, due to variation in the process lots polyethylene resins with lower strain hardening modulus will eventually be produced.

Therefore, there is a strong need for polyethylene pipes with high pressure resistance, especially slow crack growth resistance, which can be produced from polyethylene compositions of varying grades having varying polymer properties, yielding polyethylene pipes with consistent and reliable pressure resistance, independent on pipe dimensions after extrusion.

The present invention has found that the above objects can be achieved by a process for producing a pipe comprising the steps of:

  a) providing polyethylene pellets,
  b) extruding the polyethylene pellets into a pipe,

wherein the extrusion step is conducted at an extrusion melt temperature of at least 225 °C, when the extrusion bath temperature is at least 15 °C, or at an extrusion melt temperature of at least 190 °C, when the extrusion bath temperature is at least 30 °C, extrusion melt temperature and extrusion bath temperature being determined as described herein, and wherein the polyethylene pellets provided in step a) comprise a polyethylene composition comprising a copolymer of ethylene and hexene, and the polyethylene composition having a density of from 935 to 955 kg/m$^3$ and a melt flow rate $MFR_5$, determined according to ISO 1133, condition T at a load of 5.0 kg at 190 °C, of from 0.1 to 1.0 g/10 min., and

the pipe obtained in step b) has a failure time in the accelerated point loading test (PLT+) of at least 400 h, determined as described in the experimental section below.

The objects are likewise achieved by a pipe obtained from said process.

The present invention has surprisingly found pipe production conditions, specifically extrusion melt temperature and cooling bath temperature, which have an effect on the PLT+ performance of a polyethylene pipe, while the short term pressure resistance (STPR) was not negatively affected. Higher extrusion melt temperature and higher cooling bath temperature showed a surprising synergistic effect on both the PLT+ and STPR results. The invention has found particular combination of ranges for the extrusion melt temperature and cooling bath temperature during the extrusion of pipes that led to the solution of the technical problems described above. Another advantage of the invention is the use of existing polymer grades without the need for new polymer designs.

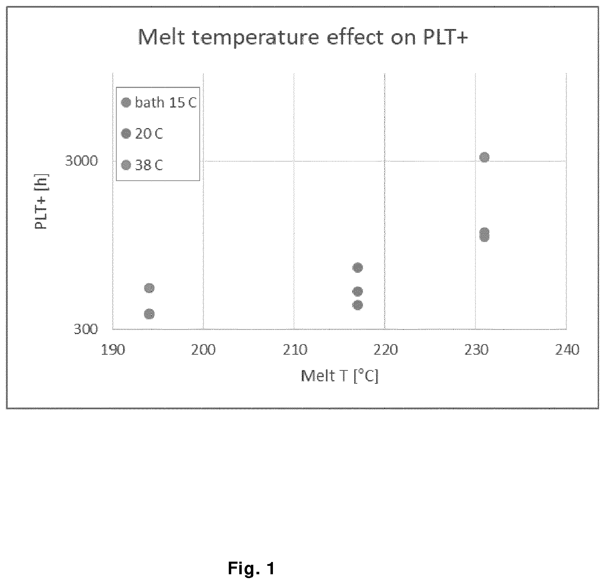

Fig. 1 is a graph illustrating the effect of extrusion melt temperature in correlation with cooling bath temperature on PLT+ performance of 32 mm pipes according to inventive samples IE1 to IE4 and the comparative sample CE1.

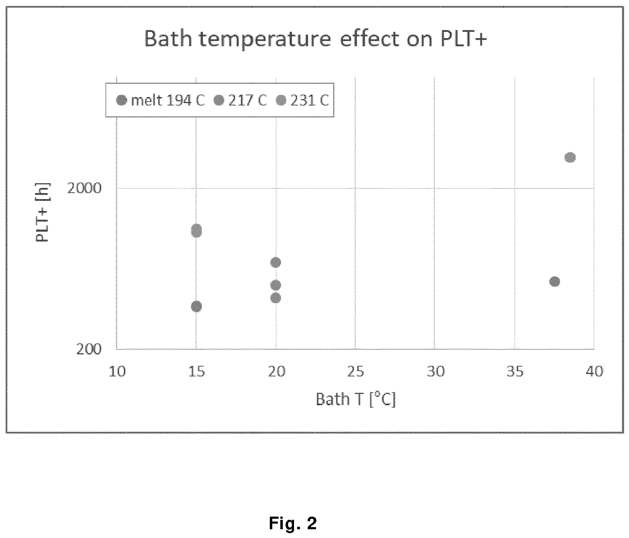

Fig. 2 is a graph illustrating the effect of the cooling bath temperature in correlation with extrusion melt temperature on PLT+ performance of 32 mm pipes according to inventive samples IE1 to IE4 and the comparative sample CE1.

The invention will be described in detail by reference to preferred embodiments thereof.

Preferably, in the process of the invention the polyethylene pellets obtained in the above step a) may comprise a polyethylene composition which comprises:

(A) a first ethylene homo- or copolymer fraction, and

(B) a second ethylene-hexene-1 copolymer fraction,

wherein fraction (A) has a lower molecular weight than fraction (B), and fraction (B) has a content of units derived from hexene-1 from 0.40 to 1.50 mol%.

The expression 'ethylene homopolymer' according to the present invention relates to an ethylene polymer that consists substantially, i.e. to least 99% by weight, more preferably at least 99.5% by weight, still more preferably at least 99.8% by weight of ethylene an most preferably is an ethylene polymer which only includes ethylene monomer units.

The term 'base resin' means the entirety of polymeric components in the polyethylene composition according to the invention, i.e. it denotes the polymeric part of the composition without fillers such as carbon black. The base resin usually is making up at least 90 wt.% of the total composition. Preferably, the base resin is consisting of polymer fractions (A) and (B), optionally further comprising a prepolymer fraction in an amount of up to 10 wt.%, more preferably up to 7 wt.%, and most preferably up to 5 wt.% of the total base resin. A person skilled in the art will understand that measurements as to properties of the base resin require the presence of stabilizers. If polymer properties of the polyethylene composition are described below, they refer to the base resin, i.e. only the polymeric components of the composition.

The polyethylene pellets provided in the above step a) comprise, preferably consist of the above defined polyethylene composition including the presence of additives discussed below.

Fraction (B) of the base resin has a content of units derived from hexene-1 from 0.80 to 1.45 mol%,

Preferably, the first ethylene homo- or copolymer fraction (A) may comprise an ethylene homo- or copolymer. More preferably, the first ethylene homo- or copolymer fraction (A) is an ethylene homo- or copolymer.

If fraction (A) is an ethylene copolymer, it is preferably a copolymer of ethylene with an alpha-olefin having from 3 to 8 carbon atoms, more preferably 4 to 6 carbon atoms, and most preferably is butene-1 or hexene-1.

Preferably, the amount of comonomer, if present, in fraction (A) is 1 mol% or smaller, e.g. from 0.1 to 0.5 mol%.

However, preferably fraction (A) is an ethylene homopolymer. Fraction (A) preferably has a density of 960 to 980 kg/m$^3$.

Furthermore, preferably, fraction (A) of the polyethylene composition has an $MFR_2$ as measured in accordance with ISO 1133 of 150 to 600 g/10min, more preferably of 175 to 550 g/10min and most preferably of 200 to 550 g/10min.

Fraction (A) and/or fraction (B) may consist of a single polymer fraction made in one reactor, or may consists of two or more partial fractions made in separate reactors.

Preferably, fraction (B) is contained in the polyethylene composition in an amount of from 51.0 to 58.5 wt.%, more preferably from 52.0 to 57.5 wt.%, even more preferably of from 53.0 to 57.0 wt.%, based on the total weight of the polyethylene composition

It is preferred that fraction (A) and/or fraction (B) consist of two partial fractions or a single fraction.

Most preferably, fraction (A) consists of one single fraction or two partial fractions, preferably produced in one or two loop reactors, respectively, and fraction (B) consists of one single fraction, preferably produced in a gas phase reactor.

The polyethylene composition of the present invention comprises fractions (A) and (B) which differ (at least) in their weight average molecular weight (Mw). Such resins are designated to be multimodal polyethylenes. The prefix "multi" relates to the number of different polymer fractions the base resin is consisting of. Thus, for example, a polyethylene composition consisting of two different fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

It is preferred in the present invention that the polyethylene composition is a bimodal polyethylene resin, i.e. the polyethylene composition preferably consists of fractions (A) and (B) and, optionally, a small amount of a prepolymer which is considered a part of the polymer fraction produced in the first reactor.

If one or more fractions of the base resin consist of partial fractions produced in separate reactors, it is preferred that the reaction conditions are chosen so that essential the same polymer is produced therein. This means that if, for example and preferably, the polyethylene composition consists of fraction (A) and (B) and fraction (A) is produced as two partial fractions in two separate loop reactors under conditions so that essentially the same or the same polymer is produced therein, the polyethylene composition will still be a bimodal resin as it consists of two fractions of different polymers.

Furthermore, the polyethylene composition preferably has a weight average molecular weight Mw 150,000 to 350,000 g/mol, more preferably of 200,000 to 320,000 g/mol.

The polyethylene composition preferably has a molecular weight distribution Mw/Mn of from 20 to 35, more preferably from 22 to 31.

The polyethylene composition preferably has a melt flow rate $MFR_5$ from 0.10 to 0.80 g/10min, preferably from 0.15 to 0.70, and still more preferably from 0.15 to 0.60 g/10min.

Preferably, the polyethylene composition has a density in the range of from 940 to 952 $kg/m^3$, and a melt flow rate $MFR_5$, determined according to ISO 1133, condition T at a load of 5.0 kg at 190 °C, of from 0.15 to 0.60 g/10 min.

In addition to the base resin, usual additives for utilization with polyolefins, such as pigments, stabilizers (antioxidant agents), antiacids and/or anti-UVs, antistatic agents and utilization agents (such as processing aid agents) may be present in the polyethylene composition. Preferably, the amount of these additives is 10 wt.% or below, further preferred 8 wt.% or below, still more preferred 5 wt.% or below, and still more preferred 4 wt.% or below of the total composition.

Preferably, the base resin makes up at least 90 wt.%, more preferably at least 92, and still more preferably at least 93 wt.% of the polyethylene composition.

In one embodiment of the present invention, the polyethylene composition of the invention comprises carbon black. Carbon black imparts black colour to the polyethylene composition and, at the same time, protects the composition from UV radiation. Still further, the addition of carbon black increases the density of the polyethylene composition compared to that of the base resin.

All embodiments and preferred embodiments as described hereinabove for the base resin and for the polyethylene composition apply also to the polyethylene composition comprising carbon black. Furthermore, the following preferred embodiments apply to the polyethylene composition comprising carbon black in addition.

In this embodiment, it is preferred that the polyethylene composition consists of the base resin, carbon black, further (usual) additives in any one of the amounts as herein described and optionally any carrier material used to compound the base resin with the pigment(s)/additives. The further additives preferably are present in amount of 3 wt.% or less, more preferred of 2.5 wt.% or less, and most preferred of 2 wt.% or less.

Preferably, carbon black is present in the polyethylene composition in an amount of 8 wt.% or below, further preferred of 1 to 4 wt.%, even more preferred of 2.0 to 2.5 wt. % of the total composition.

Usually, the amount of carbon black added is selected so that the density of the carbon black-containing polyethylene composition is from 8 to 15 $kg/m^3$, more preferably from 9 to 14 $kg/m^3$ higher than that of the base resin.

It is preferred that the polyethylene composition comprising carbon black has a density of from 953 to 965 $kg/m^3$, more preferably from 954 to 960 $kg/m^3$, and most preferably from 955 to 959 $kg/m^3$.

Carbon black is usually added in the form of a master batch, i.e. as a mixture of e.g. an HDPE and carbon black, in which carbon black is present in an amount of e.g. 30 to 50 wt.%.

Preferably, in the polyethylene composition comprising carbon black fraction (B) is present in the base resin in an amount of from 54 to 57 wt.%,

Furthermore, preferably in the polyethylene composition comprising carbon black, fraction (B) of the base resin has a content of units derived from hexene-1 from 0.9 to 1.45 mol%, more preferred of 0.95 to 1.30 mol%, still more preferably of 1.0 to 1.25 mol%, still more preferably of from 1.03 to 1.24 mol% and most preferably of from 1.04 to 1.23 mol%.

Still further, preferably in the polyethylene composition comprising carbon black the base resin has a number average molecular weight of 9,000 g/mol or higher, preferably of 9,300 g/mol or higher.

It is preferred that in the polyethylene composition comprising carbon black the base resin has a total content of units derived from hexene-1 of 0.45 to 0.70 mol%,

Preferably, in the process of the present invention, the polyethylene composition may have a strain hardening modulus of 75 MPa or higher, more preferably of 80 or higher, determined as described in the experimental section below.

Preferably, in the process of the present invention, the polyethylene composition may have a short-term pressure resistance (STPR), determined according to ISO 1167-1:2006 at 20°C and 12 MPa, in the range of at least 100 h and up to 10.000 h, more preferably in the range of at least 200 h and up to 8.000 h, even more preferably at least 400 h and up to 6000 h.

The process of the present invention involves an extrusion step b), wherein polyethylene pellets are extruded into a pipe, wherein the extrusion step is conducted at an extrusion melt temperature of at least 225 °C, when the extrusion bath temperature is at least 15 °C, or at an extrusion melt temperature of at least 190 °C, when the extrusion bath temperature is at least 30 °C, extrusion melt temperature and extrusion bath temperature being determined as described in the experimental section below.

Preferably, the extrusion step is conducted at an extrusion melt temperature of at least 228 °C, more preferably at least 230 °C, when the cooling bath temperature is at least 15 °C. Preferably, the extrusion step is conducted at an extrusion melt temperature of at least 192 °C, more preferably at least 194 °C, when the cooling bath temperature is at least 30 °C. Within the above ranges and limitations, the cooling bath temperature may preferably be at least 20 °C, more preferably at least 25 °C, even more preferably at least 30 °C, or at least 35 °C.

By the above pipe extrusion conditions, a pipe is obtained which has a failure time in the accelerated point loading test (PLT+) of at least 400 h, preferably at least 500 h, more preferably at least 600 h, determined as described in the experimental section below.

Preferably, pipes may be produced with pipe diameters of not more than 100 mm, more preferably between 20 and 80mm.

**Measurement and Determination Methods**

**a) Measurement of melt flow rate MFR**

The melt flow rate (MFR) is determined according to ISO 1133 and is indicated in g/10 min. The higher the melt flow rate, the lower the viscosity of the polymer. The MFR is determined at 190 °C for polyethylene and at a loading of 2.16 kg ($MFR_2$), 5.00 kg ($MFR_5$) or 21.6 kg ($MFR_{21}$).

The quantity FRR (flow rate ratio) is an indication of molecular weight distribution and denotes the ratio of flow rates at different loadings. Thus, $FRR_{21/5}$ denotes the value of MFR21/MFR5.

**b) Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813., Klimke, K., Parkinson, M., Piel, C., Kaminsky, W., Spiess, H.W., Wilhelm, M., Macromol. Chem. Phys. 2006;207:382.) and the RS-HEPT decoupling scheme (Filip, X., Tripon, C., Filip, C., J. Mag. Resn. 2005, 176, 239, Griffin, J.M., Tripon, C., Samoson, A., Filip, C., and Brown, S.P., Mag. Res. in Chem. 2007 45, S1, S198). A total of 16348 (16k) transients were acquired per spectrum. This setup was chosen due its high sensitivity towards sometimes low comonomer contents.

Quantitative $^{13}C\{^1H\}$ NMR spectra were processed, integrated and quantitative properties determined using custom spectral analysis automation programs. All chemical shifts are internally referenced to the bulk methylene signal ($\delta+$) at 30.00 ppm (J. Randall, Macromol. Sci., Rev. Macromol. Chem. Phys. 1989, C29, 201).

Characteristic signals corresponding to the incorporation of 1-hexene were observed (J. Randall, Macromol.

Sci., Rev. Macromol. Chem. Phys. 1989, C29, 201.) and all contents calculated with respect to all other monomers present in the polymer.

Characteristic signals resulting from isolated 1-hexene incorporation i.e. EEHEE comonomer sequences, were observed. Isolated 1-hexene incorporation was quantified using the integral of the signal at 38.2 ppm assigned to the *B4 sites, accounting for the number of reporting sites per comonomer:

$$H = I_{*B4}$$

When characteristic signals resulting from consecutive 1-hexene incorporation, i.e. EHHE comonomer sequences were observed, such consecutive 1-hexene incorporation was quantified using the integral of the signal at 40.4 ppm assigned to the $\alpha\alpha B4B4$ sites accounting for the number of reporting sites per comonomer:

$$HH = 2 * I_{\alpha\alpha B4B4}$$

When characteristic signals resulting from non consecutive 1-hexene incorporation, i.e. EHEHE comonomer sequences were observed, such non-consecutive 1-hexene incorporation was quantified using the integral of the signal at 24.6 ppm assigned to the $\beta\beta B4B4$ sites accounting for the number of reporting sites per comonomer:

$$HEH = 2 * I_{\beta\beta B4B4}$$

Due to the overlap of the signals from the *B4 and *$\beta$B4B4 sites from isolated (EEHEE) and non-consecutively incorporated (EHEHE) 1-hexene respectively the total amount of isolated 1-hexene incorporation is corrected based on the amount of non-consecutive 1-hexene present:

$$H = I_{*B4} - 2 * I_{\beta\beta B4B4}$$

With no other signals indicative of other comonomer sequences, i.e. 1-hexene chain initiation, observed the total 1-hexene comonomer content was calculated based solely on the amount of isolated (EEHEE), consecutive (EHHE) and non-consecutive (EHEHE) 1-hexene comonomer containing sequences:

$$H_{total} = H + HH + HEH$$

Characteristic signals resulting from saturated end-groups were observed. The content of such saturated end-groups was quantified using the average of the integral of the signals at 22.8 and 32.2 ppm assigned to the 2s and 3s sites respectively:

$$S = (1/2)*( I_{2S} + I_{3S} )$$

The relative content of ethylene was quantified using the integral of the bulk methylene ($\delta+$) signals at 30.00 ppm:

$$E = (1/2)*I_{\delta+}$$

The total ethylene content was calculated based the bulk methylene signals and accounting for ethylene units present in other observed comonomer sequences or end-groups:

$$E_{total} = E + (2/2)*H + (1/4)*HH + (3/4)*HEH + (3/2)*S$$

The total mole fraction of 1-hexene in the polymer was then calculated as:

$$fH = H_{total} / ( E_{total} + H_{total} )$$

The total comonomer incorporation of 1-hexene in mole percent was calculated from the mole fraction in the usual manner:

$$H \, [mol\%] = 100 * fH$$

The total comonomer incorporation of 1-hexene in weight percent was calculated from the mole fraction in the standard manner:

$$H \, [wt\%] = 100 * ( fH * 84.16) / ( (fH * 84.16) + ((1\text{-}fH) * 28.05) )$$

The comonomer incorporation of 1-hexene in mole percent in high Mw fraction was calculated from the total comonomer incorporation in the usual manner:

$$H \text{ in HMW } [mol\%] = 100 \, \% * H \, [mol\%] / \text{ Split of HMW fraction } \%$$

Note, that amount of HDPE or LDPE color master batch carrier resin is not taken into account.

**c) Molecular weight properties**

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i/M_i)}$$

$$M_w = \frac{\sum_{i=1}^{N} (A_i \, x \, M_i)}{\sum A_i}$$

$$M_z = \frac{\sum_{i=1}^{N} (A_i \, x \, M_i^2)}{\sum (A_i/M_i)}$$

For a constant elution interval $\Delta V_i$, where $A_i$ and $M_i$ are the chromatographic peak slice area and polyolefin molecular weight (MW).

A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 μL of sample solution were injected per analysis. The column set was calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

**d) Density**

Density of the polymer was measured according to ISO 1183-1:2004 (method A) on compression moulded specimen prepared according to EN ISO 1872-2 (Feb 2007) and is given in $kg/m^3$.

**e) Strain Hardening Modulus**

Strain hardening modulus of the compounds was obtained from a tensile stress-strain curve above the natural draw ratio and represents the slope of the increase in the stress-strain trend at very high strains (the strain hardening regime). It was measured at 80°C and 20 mm/min on preconditioned (120°C/1h) 300 $\mu$m thick specimens according to ISO 18488.

**f) Short term pressure resistance**

The pressure test on un-notched 32 mm SDR 11 pipes having a length of 450 mm is carried out in water-inside and water-outside environment according to ISO 1167-1:2006. End caps type A were used. The time to failure is determined in hours. A hoop stress of 12.0 MPa and a temperature of 20 °C was applied.

**g) Accelerated Point Loading Test (PLT+)**

The accelerated point loading test (PLT+) is carried in accordance with PAS 1075 and simulates an installation situation in which the pipe is disturbed by the external influence of a point load, such as stones or sharp-cornered objects.

The test procedure is similar to the internal pressure creep test, with the difference being that an external point load (generally a punch) is also applied before the internal pressure. To accelerate the test further, a wetting agent solution is applied to the test sample.

The accelerated point load test (PLT+) was performed by Hessel Ingenieurtechnik GmbH, Roetgen, Germany.

The ends of a 32 mm outer diameter SDR 11 pipes were closed by using end-caps. One of the end caps was equipped with a pressure connection.

The required surface elongation at the inner pipe wall (i.e. the above yield elongation) was produced by a tool displacement from the outer surface along the radius of the pipe with a tool tip radius of 5 mm.

The internal pressure of the pipe was selected according to a circumferential stress of 4 $N/mm^2$. The test temperature was 90 °C. In order to shorten the testing times the investigations were performed using an 2% aqueous 'Netzmittel 5' (tenside used by Hessel Ingenieurtechnik) in demineralised water which was continuously mixed inside the pipe..

**Examples**

Polyethylene compositions and pipes comprising carbon black

Polyethylene base resins and compositions according to the invention (IE1 to IE4) and for comparison (CE1) were produced using a Ziegler-Natta catalyst which was prepared according to Example 1 of EP 1 378 528 A1).

A loop reactor having a volume of 50 $dm^3$ was operated at a temperature of 70 °C and a pressure of 57 bar. Into the reactor were fed ethylene, propane diluent and hydrogen. Also a solid polymerization catalyst component produced as described above was introduced into the reactor together with triethylaluminum cocatalyst so that the molar ratio of Al/Ti was about 15. The estimated production split was 2 wt.%.

A stream of slurry was continuously withdrawn and directed to a loop reactor having a volume of 150 $dm^3$ and which was operated at a temperature of 95 °C and a pressure of 55 bar. Into the reactor were further fed additional ethylene, propane diluent and hydrogen so that the ethylene concentration in the fluid mixture was 3.4 % by mole and the hydrogen to ethylene ratio was 415 mol/kmol. The estimated production split was 16 wt.%. The ethylene homopolymer withdrawn from the reactor had $MFR_2$ of 168 g/10 min.

A stream of slurry from the reactor was withdrawn intermittently and directed into a loop reactor having a volume of 350 $dm^3$ and which was operated at 95 °C temperature and 54 bar pressure. Into the reactor was further added a fresh propane, ethylene, and hydrogen so that the ethylene concentration in the fluid mixture was 3.3 mol-% and the molar ratio of hydrogen to ethylene was 345 mol/kmol. The ethylene homopolymer withdrawn from the reactor had $MFR_2$ of 280 g/10 min. The estimated production split was 27 wt.%.

The slurry was withdrawn from the loop reactor intermittently and directed to a flash vessel operated at a temperature of 50 °C and a pressure of 3 bar. From there the polymer was directed to a fluidized bed gas phase reactor operated at a pressure of 20 bar and a temperature of 80 °C. Additional ethylene and 1-hexene comonomer, nitrogen as inert gas and hydrogen were added so that the molar ratio of hydrogen to ethylene was 7 mol/kmol and the molar ratio of 1-hexene to ethylene was 35 mol/kmol. The estimated production split was 55 wt.%. The polymer had a melt flow rate $MFR_5$ of 0.20 g/10 min and a density of 947.0 kg/m$^3$.

Polymerization conditions and properties of the produced base resins and polyethylene compositions of the inventive and comparative examples are shown in Tables 1 and 2, respectively.

Table 1.

| Example | |
|---|---|
| **Prepoly. reactor** | |
| Temp. (°C) | 70 |
| Press. (kPa) | 5755 |
| Split (wt.%) | 2 |
| **First loop reactor** | |
| Temp. (°C) | 95 |
| Press. (kPa) | 5536 |
| C2 conc. (mol%) | 3.7 |
| H2/C2 ratio (mol/kmol) | 376 |
| Split (wt.%) | 16 |
| MFR2 (g/10min) | 170 |
| **Second loop reactor** | |
| Temp. (°C) | 95 |
| Press. (kPa) | 5392 |
| C2 conc. (mol%) | 3.7 |
| H2/C2 ratio (mol/kmol) | 322 |
| Split (wt.%) | 27 |
| MFR2 (g/10min) | 280 |
| **Gas phase reactor** | |
| Temp. (°C) | 85 |
| Press. (kPa) | 2000 |
| H2/C2 ratio (mol/kmol) | 7 |
| C6/C2 ratio (mol/kmol) | 35 |
| Split (wt.%) | 55 |
| | |
| **Base resin properties** | |
| Density [kg/m$^3$] | 947.0 |
| **Polyethylene composition properties** | |
| $MFR_5$ [g/10min] | 0.23 |
| MFR21 [g/10min] | 6.23 |
| Mn [kg/mol] | 9.9 |
| Mw [kg/mol] | 259 |
| Mz [kg/mol] | 1,365 |
| Mw/Mn | 26.0 |
| C6 total [mol%] | 0.48 |

(continued)

| Polyethylene composition properties | |
|---|---|
| C6 in HMW fraction [mol%] | 0.87 |
| SH modulus [MPa] | 75 |
| Density [kg/m$^3$] | 959.4 |

The polymer powder was mixed under nitrogen atmosphere with 5.5% of carbon black master-batch (CB content 40%), 2500 ppm of antioxidants and 400 ppm Ca-stearate.

## Pipe extrusion

Pipe extrusion of 32x3 (outer diameter x wall thickness) pipes was performed on a Krauss-Maffei 45-36D (L/D) single screw extruder. The extruder has a modified PP-barrier screw installed with four heated cylinder zones and five tool zones. The downstream equipment is a 9m spray-cooling vacuum tank with two chambers and a varying cooling bath temperature as given in Table 2 below.

For 32 mm pipe extrusion, the samples have been processed at an output rate of 50 kg/h and a screw speed of the extruder of ~ 57 rpm. The melt temperature given in Table 2 below was achieved at a melt pressure of 213-216 bars. All samples have been produced at a constant meter weight of 280 g/m and a line speed of 2.97 m/minute.

**Table 2**

| | | IE1 | IE2 | IE3 | IE4 | CE1 |
|---|---|---|---|---|---|---|
| Extrusion bath T [°C] | | 39 | 15 | 20 | 38 | 15 |
| Extrusion melt T [°C] | | 231 | 231 | 217 | 194 | 194 |
| PLT+ 32mm pipe | pipe 1 | 3150* | 1066 | 417 | 530 | 368 |
| | pipe 2 | 3150* | 1129 | 504 | | 373 |
| | pipe 3 | | | 696 | | |
| | avg | 3150* | 1097 | 539 | | 371 |
| STPR 20 °C, 12MPa | pipe 1 | 1623 | 1398 | 1467 | 2364 | 1551 |
| | pipe 2 | 2599 | 1310 | 1794 | 2250 | 1431 |
| | avg | 2111 | 1354 | 1630 | 2307 | 1491 |
| *: test stopped without pipe failure | | | | | | |

The above results show that within specific ranges of higher extrusion melt temperature and/or cooling bath temperature, higher performance in pressure resistance (PLT+ test and STPR performance) could be achieved.

## Claims

1.  Process for producing a pipe, comprising the steps of:

      a) providing polyethylene pellets,
      b) extruding the polyethylene pellets into a pipe,

      wherein the extrusion step is conducted at an extrusion melt temperature of at least 225 °C, when the extrusion bath temperature is at least 15 °C, or at an extrusion melt temperature of at least 190 °C, when the extrusion bath temperature is at least 30 °C, extrusion melt temperature and extrusion bath temperature being determined as described in the experimental part, and wherein the polyethylene pellets provided in step a) comprise a polyethylene composition comprising a copolymer of ethylene and hexene, and the polyethylene composition having a density of from 935 to 955 kg/m$^3$ and a melt flow rate MFR$_5$, determined according to ISO 1133, condition T at a load of 5.0 kg at 190 °C, of from 0.10 to 1.0 g/10 min., and

the pipe obtained in step b) has a failure time in the accelerated point loading test (PLT+) of at least 400 h, determined as described in the experimental part.

2. The process according to claim 1, wherein the polyethylene composition comprises

    (A) a first ethylene homo- or copolymer fraction, and
    (B) a second ethylene-hexene-1 copolymer fraction,

wherein fraction (A) has a lower weight average molecular weight (Mw) than fraction (B), and
fraction (B) has a content of units derived from hexene-1 from 0.40 to 1.50 mol%.

3. The process according to claim 2, wherein the polyethylene composition has a density in the range of from 940 to 952 kg/m$^3$, a melt flow rate MFR$_5$, determined according to ISO 1133, condition T at a load of 5.0 kg at 190 °C, of from 0.15 to 0.60 g/10 min.

4. The process according to any one of claims 1 to 3, wherein the pipe has a failure time in the accelerated point loading test (PLT+) of at least 500 h, determined as described in the experimental part.

5. The process according to any one of the preceding claims, wherein the polyethylene composition has a strain hardening modulus of 75 MPa or higher, more preferably of 80 or higher, determined as described in the experimental part.

6. The process according to any one of the preceding claims, wherein the polyethylene composition has a short-term pressure resistance (STPR), determined according to ISO 1167-1:2006 at 20°C and 12 MPa, in the range of at least 100 h and up to 10.000 h.

7. The process according to any one of the preceding claims, wherein the polyethylene composition has a short-term pressure resistance (STPR), determined according to ISO 1167-1:2006 at 20°C and 12 MPa, in the range of at least 200 h and up to 8.000 h.

**Fig. 1**

**Fig. 2**

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

**EP 21 17 5408**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/312017 A1 (HEDESIU CRISTIAN [AE] ET AL) 27 October 2016 (2016-10-27) * examples IE1-IE5 * ----- | 1-7 | INV. C08L23/06 |

**TECHNICAL FIELDS SEARCHED (IPC)**

C08L

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:
**see sheet C**

| Place of search | Date of completion of the search | Examiner |
|---|---|---|
| Munich | 3 February 2022 | Rouault, Yannick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................

& : member of the same patent family, corresponding
document

EPO FORM 1503 03.82 (P04E07)

Europäisches
Patentamt

European
Patent Office

Office européen
des brevets

**INCOMPLETE SEARCH
SHEET C**

Application Number

EP 21 17 5408

Claim(s) completely searchable:
‑

Claim(s) searched incompletely:
1‑7

Reason for the limitation of the search:

The search report has been drawn up on the basis of the subject‑matter searched (Rule 63(2) EPC), which is what as far as can be understood, could reasonably be expected to be claimed later in the procedure, and the corresponding claims, namely the examples.

a) Present claim 1 relates to a product defined (inter alia) by reference to the following unusual parameter:
failure time in the accelerated point loading test (PLT+).
The point loading test is described in the annex A 3 in the document PAS 1075. However, the accelerated point loading test is not a standard test. Moreover, the wetting agent solution applied to the test sample in order to accelerate the test is not sufficiently described in the application. The use of this unusual parameter in the present context is considered to lead to a lack of clarity, because the claim does not clearly identify the products encompassed by it as the parameter cannot be clearly and reliably determined by indications in the description or by objective procedures which are usual in the art. This makes it impossible to compare the claim with the prior art. As a result, the application does not comply with the requirement of clarity under Article 84 EPC.
The lack of clarity is such that a meaningful search of the whole claimed subject‑matter of claim 1 can not be carried out (Rule 63 EPC).
b) Explicit references in the claims to features elucidated in the description or in the drawings are only permissible where "absolutely necessary" (cf. GL/PCT‑EPO F‑IV, 4.17 ) : the point here is that neither the extrusion melt temperature nor the extrusion bath temperature are more closely defined in the description.
c) The technical feature
the extrusion step is conducted at an extrusion melt temperature of at least 225 °C, when the extrusion bath temperature is at least 15 °C,
or
at an extrusion melt temperature of at least 190 °C, when the extrusion bath temperature is at least 30 °C
introduces two problems.
i) Non‑unity (Art. 82 EPC).
The equivalence  of the two technical features : those features are not obvious alternatives and a such are not same or corresponding special technical features (see F‑V, 3.2.5 and R. 44 EPC).
ii) Clarity (Art. 84 EPC).
When the extrusion bath temperature is 35°C, it is both over 15°C and over 30°C and a melt temperature of at least 190 °C but anywhere below or over 225°C can be chosen.

## ANNEX TO THE EUROPEAN SEARCH REPORT
## ON EUROPEAN PATENT APPLICATION NO.

EP 21 17 5408

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2022

| Patent document cited in search report | | Publication date | Patent family member(s) | | Publication date |
|---|---|---|---|---|---|
| US 2016312017 | A1 | 27-10-2016 | AU | 2014365737 A1 | 21-04-2016 |
| | | | CN | 105705524 A | 22-06-2016 |
| | | | EA | 201691052 A1 | 31-10-2016 |
| | | | EP | 2894174 A1 | 15-07-2015 |
| | | | ES | 2660121 T3 | 20-03-2018 |
| | | | PL | 2894174 T3 | 31-08-2018 |
| | | | SG | 11201602510Y A | 28-07-2016 |
| | | | US | 2016312017 A1 | 27-10-2016 |
| | | | WO | 2015090596 A1 | 25-06-2015 |

EPO FORM P0459

For more details about this annex : see Official Journal of the European Patent Office, No. 12/82

**EP 4 092 079 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0739937 A
- WO 02102891 A
- EP 20185204
- EP 1378528 A1

**Non-patent literature cited in the description**

- **SCHEIRS et al.** Scheirs, Bohm, Boot and Leevers: PE100 Resins for Pipe Applications. *TRIP,* 1996, vol. 4 (12), 408-415
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- *J. Randall, Macromol. Sci., Rev. Macromol. Chem. Phys.,* 1989, vol. C29, 201